# EUROPÄISCHE PATENTSCHRIFT

(11) **EP 3 520 196 B1**
(45) Veröffentlichungstag und Bekanntmachung des Hinweises auf die Patenterteilung: **13.04.2022**
(21) Anmeldenummer: 17743021.2
(22) Anmeldetag: 24.07.2017
(51) Int. Cl.: H02J 7/14, H02J 7/16, H02J 7/24, H02J 7/00

(54) **SPANNUNGSREGLER EINER LICHTMASCHINE**
VOLTAGE CONTROLLER OF A GENERATOR
RÉGULATEUR DE TENSION D'UNE GÉNÉRATRICE

(30) Priorität: 29.09.2016 DE 102016218798
(43) Veröffentlichungstag der Anmeldung: 07.08.2019
(73) Patentinhaber: Robert Bosch GmbH, 70442 Stuttgart (DE)
(72) Erfinder: KNOBELSPIES, Christoph, 71720 Oberstenfeld (DE)
(86) Internationale Anmeldenummer: PCT/EP2017/068618
(87) Internationale Veröffentlichungsnummer: WO 2018/059790

(56) Entgegenhaltungen:
- EP-A2- 1 696 554
- DE-A1-102013 202 197
- US-A- 5 602 459
- US-A1- 2004 232 538
- US-B1- 6 239 996

## Beschreibung

### Stand der Technik

Die vorliegende Erfindung betrifft einen Spannungsregler einer Lichtmaschine. Insbesondere betrifft die Erfindung auch eine Lichtmaschine umfassend einen derartigen Spannungsregler.

Für eine Bereitstellung elektrischer Energie in Kraftfahrzeugen ist der Einsatz von Generatoren üblich. Solche Generatoren werden als Lichtmaschine bezeichnet. Der Generator wandelt mechanische Energie, die über eine Riemenscheibe aus dem Antriebsmotor des Fahrzeugs zugeführt wird, in elektrische Energie um. Das die Lichtmaschine antreibende Moment ist somit abhängig von einem Zustand des Verbrennungsmotors.

Üblicherweise sind Lichtmaschinen mit einem Spannungsregler gekoppelt, der sich aus der eigenen Generatorspannung und/oder aus dem Bordnetz versorgt. In diesem Generator werden allgemein Regeleinrichtungen eingesetzt, zumeist in Form von integrierten Schaltkreisen, die mit Leistungselektronik ausgebildet sind. Die Regeleinrichtungen stellen den in dem Bordnetz des Fahrzeugs erforderlichen Strom entsprechend den Anforderungen der elektrischen Verbraucher und der Ladestrategien der Batterie des Fahrzeugs ein. Dazu wird die Bordnetzspannung als Regelgröße verwendet und permanent mit einer Sollspannung abgeglichen. Eine Bordnetzspannung ist insbesondere identisch zu einer Ausgangsspannung der Lichtmaschine.

Insbesondere ist ein Spannungsregler aus der EP 1 675 245 A2 bekannt. Dieser Spannungsregler weist zwei Schalter auf. So sorgt ein erster Schalter für ein Beibehalten einer Bordnetzspannung bei geringfügigen Veränderungen. Sollte die Bordnetzspannung auf Grund verschiedener Umstände, wie insbesondere dem Abschalten eines energieintensiven Verbrauchers, stark ansteigen, dient der zweite Schalter zur schnellen Absenkung der Generatorspannung. Somit muss ein Schwellwert, bei dem die zweite Stufe aktiv wird, deutlich über dem Schwellwert der ersten Stufe liegen. Dies hat den Nachteil, dass in dem Fall, in dem an dem ersten Schalter ein Defekt auftritt und diese ihrer Regelungsaufgaben nicht mehr nachkommen kann, der zweite Schalter die Bordnetzspannung nur auf einem höheren Niveau halten kann. Dies kann zu potentiellen Beschädigungen innerhalb des Bordnetzes führen.

Weitere Laderegler sind aus der EP 1 696 554 A2, der US 2004/232538 A1 sowie der US 5,602,259 A bekannt.

### Offenbarung der Erfindung

Der erfindungsgemäße Spannungsregler erlaubt vorteilhafterweise ein Halten der Bordnetzspannung eines Fahrzeugs auf einem für Komponenten des Bordnetzes ungefährlichen Niveau. Dabei verzichtet der Spannungsregler vorteilhafterweise auf zusätzliche Anschlüsse zum Erhalten von zusätzlichen Signalen, da diese Rechenaufwand und zusätzliche Kosten verursachen. Gleichzeitig ist ein zuverlässiges Regeln der Bordnetzspannung ermöglicht. Diese Vorteile werden erreicht durch den Spannungsregler nach Anspruch 1.

Der erfindungsgemäße Spannungsregler einer Lichtmaschine umfasst eine erste Regeleinheit und eine von der ersten Regeleinheit unabhängige zweite Regeleinheit. Dabei ist die erste Regeleinheit zum Senken einer Ausgangsspannung der Lichtmaschine bei Überschreiten eines ersten Maximalwerts ausgebildet. Die zweite Regeleinheit ist ebenfalls zum Senken der Ausgangsspannung der Lichtmaschine ausgebildet. Dabei ist vorgesehen, dass dieses Senken wahlweise bei Überschreiten des ersten Maximalwerts oder bei Überschreiten eines von dem ersten Maximalwert verschiedenen zweiten Maximalwerts geschieht. Somit kann die zweite Regeleinheit bevorzugt zwei verschiedene Aufgaben übernehmen. Wird die zweite Regeleinheit als nachgeschaltete Komponente zu der ersten Regeleinheit verwendet, so ist insbesondere ein Spannungsregler wie aus dem Stand der Technik umsetzbar. Dies bedeutet, dass die erste Regeleinheit eingerichtet ist, die Ausgangsspannung auf einem vordefinierten Wert oder in einem vordefinierten Intervall zu halten. Dies wird insbesondere dadurch erreicht, dass die Ausgangsspannung gesenkt wird, wenn diese einen zu hohen Wert erreicht. Die zweite Regeleinheit ist dann vorteilhafterweise dazu verwendbar, starke Überhöhung in der Ausgangsspannung rasch zu senken. Fällt jedoch die erste Regeleinheit aus, so kann die zweite Regeleinheit die Aufgabe der ersten Regeleinheit übernehmen. Somit ist vermieden, dass bei Defekt der ersten Regeleinheit die Ausgangsspannung der Lichtmaschine auf einem zu hohen Niveau verbleibt.

Die Unteransprüche zeigen bevorzugte Weiterbildungen der Erfindung.

Bevorzugt ist vorgesehen, dass die erste Regeleinheit und die zweite Regeleinheit zum Beeinflussen einer als Stellgrößen dienenden Erregerspannung einer Erregerwicklung der Lichtmaschine ausgebildet sind. Insbesondere ist über die Erregerspannung die Ausgangsspannung der Lichtmaschine einfach regelbar, da durch die Erregerwicklung geringere elektrische Leistungen transportiert werden, als von der Lichtmaschine abgegeben werden können. Würde die Ausgangsspannung als Stellgröße verwendet, so müssten hohe elektrische Leistungen verarbeitet werden, was durch das Vorsehen der Erregerspannung als Stellgröße vermieden ist. Somit kann der Spannungsregler einfach und kostengünstig aufgebaut sein. Insbesondere können Leistungshalbleiter verwendet werden, die lediglich geringen elektrischen Leistungen widerstehen müssen.

Die zweite Regeleinheit ist bevorzugt in einem Normalzustand zum Senken der Ausgangsspannung bei Überschreiten des zweiten Maximalwerts ausgebildet. Zum Senken der Ausgangsspannung bei Überschreiten des ersten Maximalwerts ist die zweite Regeleinheit bevorzugt nur dann ausgebildet, wenn ein Defekt an der ersten Regeleinheit vorliegt. Somit ist sichergestellt, dass in einem Normalbetrieb die zweite Regeleinheit zusammen mit der ersten Regeleinheit einen abgestuften Regler darstellt. Dadurch ist in dem Normalbetrieb hauptsächlich die erste Regeleinheit aktiv, die zweite Regeleinheit greift erst dann ein, wenn die erste Regeleinheit nicht mehr korrekt funktioniert. Erst im Falle eines Defekts der ersten Regeleinheit übernimmt die zweite Regeleinheit die Aufgaben der ersten Regeleinheit. Somit ist kein abgestufter Regler mehr vorhanden, allerdings ist dennoch sichergestellt, dass die Ausgangsspannung der Lichtmaschine auch dann abgesenkt wird, wenn diese den ersten Maximalwert überschreitet. Ohne ein solches angleichen, würde die zweite Regeleinheit weiterhin erst dann die Spannung absenken, wenn der zweite Maximalwert überschritten ist, was insbesondere zu einer fortwährend überhöhten Spannung innerhalb des Bordnetzes führen könnte. Eine solche Gefahr wird daher vermieden.

Ein Defekt an der ersten Regeleinheit wird vorteilhafterweise dadurch erkannt, dass die Ausgangsspannung über einen vordefinierten Zeitraum oberhalb eines vordefinierten Wertes liegt. Da die erste Regeleinheit zum Absenken der Ausgangsspannung ausgebildet ist, wenn diese den ersten Maximalwert überschreitet, kann auf einen Defekt in der ersten Regeleinheit dadurch geschlossen werden, dass diese Aufgabe von der ersten Regeleinheit nicht mehr wahrgenommen wird. Somit ist die zweite Regeleinheit ausgebildet, die Ausgangsspannung auch dann zu senken, wenn diese über den vordefinierten Zeitraum oberhalb des ersten Maximalwerts oder oberhalb eines zweiten Mininalwertes, der geringer als der zweite Maximalwert aber höher als der erste Maximalwert ist, liegt. Der zweite Minimalwert dient als Schwelle zum Deaktivieren der zweiten Regeleinheit, was in einem nachfolgenden Absatz beschrieben ist. Als vordefinierten Zeitraum kann insbesondere ein Zeitraum von mindestens einer halben Sekunde angesehen werden. Der Spannungsregler benötigt somit keine zusätzlichen Komponenten zum Überwachen der ersten Regeleinheit, vielmehr kann die zweite Regeleinheit selbst erkennen, wenn ein Defekt in der ersten Zeit vorliegt.

Der zweite Maximalwert ist bevorzugt größer als der erste Maximalwert. Somit ist ein abgestufter Regler realisierbar, bei dem die zweite Regeleinheit erst dann eingreift, wenn die Spannung oberhalb einer oberen Grenze liegt, die durch den zweiten Maximalwert repräsentiert wird. Unterhalb der oberen Grenze ist davon auszugehen, dass ein Regeln der Ausgangsspannung durch die erste Regeleinheit durchgeführt werden kann. Sollte jedoch der zweite Maximalwert überschritten werden, so ist von einer starken Überhöhung der Spannung innerhalb des Bordnetzes auszugehen, was insbesondere durch das Abschalten eines verbrauchsintensiven Verbrauchers passieren kann. In diesem Fall ist die Ausgangsspannung durch die zweite Regeleinheit rasch absenkbar, um wieder in einen Bereich zu gelangen, in dem diese von der ersten Regeleinheit geregelt werden kann.

Die erste Regeleinheit umfasst bevorzugt eine erste Schalteinheit, während die zweite Regeleinheit bevorzugt eine zweite Schalteinheit umfasst. Dabei ist vorgesehen, dass durch die erste Schalteinheit und durch die zweite Schalteinheit die Erregerwicklung entladbar ist. Somit ist die Ausgangsspannung dadurch absenkbar, dass die Erregerwicklung entladen wird. Ein Entladen der Erregerwicklung erfolgt dabei mittels einer charakteristischen Entladekurve. Diese Entladekurve ist abhängig von einer Zeitkonstante, so dass ein rasches Entladen nicht immer möglich ist. Daher erfolgt das Entladen sowohl durch die erste Regeleinheit als auch durch die zweite Regeleinheit.

Besonders vorteilhaft weist die erste Regeleinheit eine erste Logikeinheit und die zweite Regeleinheit eine zweite Logikeinheit auf. Dabei ist vorgesehen, dass das erste Steuergerät und das zweite Steuergerät zum Erfassen der Ausgangsspannung eingerichtet sind. Somit ist durch jede Logikeinheit die Ausgangsspannung einzelnen erfassbar. Ein Austausch von Daten zwischen der ersten Regeleinheit und der zweiten Regeleinheit findet bevorzugt nicht statt. Vielmehr arbeiten sowohl die erste Regeleinheit als auch die zweite Regeleinheit autonom und erlauben somit eine Redundanz innerhalb des Spannungsreglers bereitzustellen. Die erste Logikeinheit ist zum Schalten der ersten Schalteinheit ausgebildet, wenn die Ausgangsspannung den ersten Maximalwert überschreitet und wenn die Ausgangsspannung einen ersten Minimalwert, der geringer als der erste Maximalwert ist, unterschreitet. Das (Aus-)Schalten erfolgt somit bevorzugt zum Entladen der Erregerwicklung, wenn die Ausgangsspannung den Maximalwert überschreitet. Sollte die Ausgangsspannung den ersten Minimalwert unterschreiten, so ist ein weiteres Entladen der Erregerwicklung nicht mehr notwendig. In diesem Fall erfolgt ein weiteres (Ein-)Schalten der ersten Schalteinheit, so dass ein Entladen der Erregerwicklung beendet wird. Die zweite Logikeinheit ist wahlweise zum Schallten der zweiten Schalteinheit ausgebildet, wenn die Ausgangsspannung den ersten Maximalwert überschreitet und wenn die Ausgangsspannung den ersten Minimalwert unterschreitet, oder alternativ wenn die Ausgangsspannung den zweiten Maximalwert überschreitet und wenn die Ausgangsspannung einen zweiten Minimalwert unterschreitet. Dabei ist vorgesehen, dass der zweite Minimalwert geringer als der zweite Maximalwert ist. Insbesondere ist auch vorgesehen, dass der zweite Minimalwert größer als der erste Maximalwert ist. Somit ist wiederum sichergestellt, dass die zweite Regeleinheit wahlweise die Aufgaben der ersten Regeleinheit übernehmen kann, wenn diese defekt ist, oder alternativ eine nachgeschaltete Regelung für die erste Regeleinheit darstellt. Hierzu ist die zweite Regeleinheit durch die zweite Logikeinheit wahlweise zwischen dem ersten Maximalwert und ersten Minimalwert sowie den zweiten Maximalwert und zweiten Minimalwert umschaltbar.

Die erste Schalteinheit ist zum Schalten einer elektrischen Verbindung zwischen einer ersten Anschlussstelle der Erregerwicklung und einem Pluspol der Lichtmaschine ausgebildet. Die zweite Schalteinheit ist zum Schalten einer elektrischen Verbindung zwischen einer zweiten Anschlussstelle der Erregerwicklung und einem Minuspol der Lichtmaschine ausgebildet. Dabei ist vorgesehen, dass sich die Erregerwicklung zwischen der ersten Anschlussstelle und der zweiten Anschlussstelle erstreckt.

Besonders vorteilhaft weist die erste Regeleinheit außerdem eine erste Sperreinheit auf. Die erste Sperreinheit ist insbesondere eine Diode. Die erste Sperreinheit ist zwischen der ersten Anschlussstelle und dem Minuspol angeordnet und sperrt einen Stromfluss von der ersten Anschlussstelle zu dem Minuspol. Die zweite Regeleinheit weist eine zweite Sperreinheit auf, die zwischen der zweiten Anschlussstelle und dem Pluspol angeordnet ist. Diese sperrt einen Stromfluss von dem Pluspol zu der zweiten Anschlussstelle. Auch die zweite Sperreinheit ist bevorzugt als Diode ausgebildet. Somit sind insgesamt zwei Freiläufe innerhalb des Spannungsreglers definiert. Diese beiden Freiläufe werden durch Schalten der ersten Schalteinheit und der zweiten Schalteinheit aktiviert oder deaktiviert und stellen somit die Möglichkeit des Absenkens der Ausgangsspannung der Lichtmaschine dar. Ein erster Freilauf wird durch Trennen der Verbindung zwischen Pluspol und erster Anschlussstelle durch Schalten des ersten Schaltelements aktiviert. In diesem Fall erfolgt ein Freilauf durch die Erregerwicklung, die zweite Anschlussstelle, das zweite Schaltelement, das erste Sperrelement und schließlich über die erste Anschlussstelle zurück zu der Erregerwicklung. Ein zweiter Freilauf wird durch Trennen der elektrischen Verbindung zwischen zweiter Anschlussstelle und Minuspol durch Schalten der zweiten Schaltvorrichtung aktiviert. In diesem Fall erfolgt ein Freilauf von der Erregerwicklung über die zweite Anschlussstelle, die zweite Sperreinheit, dass Bordnetz, die erste Sperreinheit und über die erste Anschlussstelle zurück zu der Erregerwicklung.

Die Erfindung betrifft schließlich eine Lichtmaschine umfassend einen derartigen Spannungsregler. Insbesondere ist eine solche Lichtmaschine in einem Fahrzeug als Generator einsetzbar. Durch den zuvor beschriebenen Spannungsregler ist dabei sichergestellt, dass die Ausgangsspannung und damit eine Spannung innerhalb eines Bordnetzes des Fahrzeugs nicht dauerhaft oberhalb des ersten Maximalwerts liegt. Somit ist ein Defekt von Komponenten innerhalb des Bordnetzes vermieden.

### Kurze Beschreibung der Zeichnung(en)

Nachfolgend werden Ausführungsbeispiele der Erfindung unter Bezugnahme auf die begleitende Zeichnung im Detail beschrieben. In der Zeichnung ist:
- Figur 1: eine schematische Abbildung einer Lichtmaschine umfassend einen Spannungsregler gemäß einem Ausführungsbeispiel der Erfindung, und
- Figur 2: eine schematische Abbildung eines Diagramms der Ausgangsspannung während einer Regelung durch den Spannungsregler gemäß dem Ausführungsbeispiel der Erfindung.

### Ausführungsform(en) der Erfindung

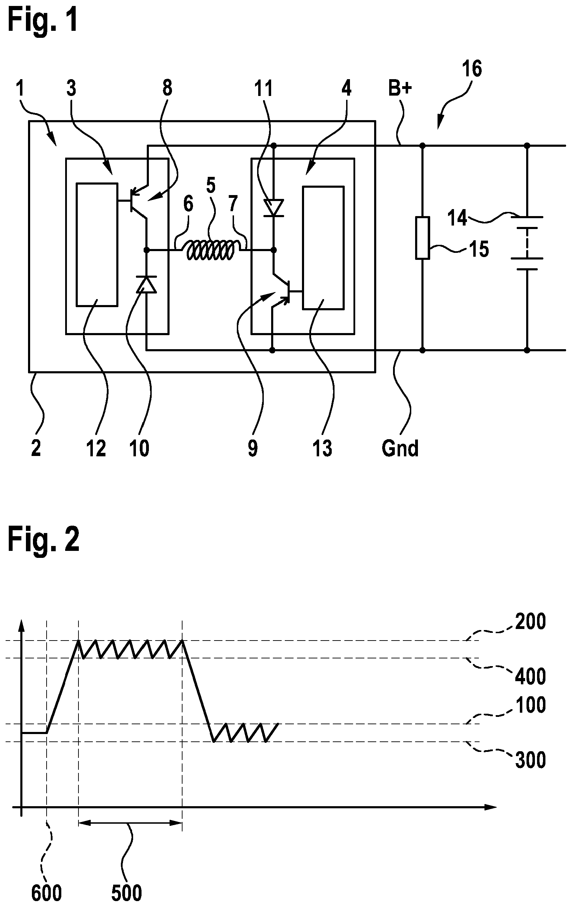

Figur 1 zeigt schematisch einen Spannungsregler 1, der in einer Lichtmaschine 2 angeordnet ist. Von der Lichtmaschine 2 ist lediglich die Erregerwicklung 5 gezeigt, ein Rotor und Stator zur Wandlung von mechanischer Energie in elektrische Energie sind nicht dargestellt. Über die Lichtmaschine 2 ist ein Bordnetz 16 mit elektrischer Energie versorgbar, wobei das Bordnetz 16 durch eine Fahrzeugbatterie 14 und durch einen Verbraucher 15 dargestellt ist. Das Bordnetz 16 weist einen Pluspol B+ sowie einen Minuspol GND auf. Über den Pluspol B+ und den Minuspol GND ist das Bordnetz 16 mit der Lichtmaschine 2 und somit den Spannungsregler 1 elektrisch verbunden. Eine Ausgangsspannung der Lichtmaschine 2 stellt somit auch eine Spannung innerhalb des Bordnetzes 16 dar.

Der Spannungsregler 1 umfasst eine erste Regeleinheit 3 und eine zweite Regeleinheit. Die erste Regeleinheit 3 wiederum umfasst eine erste Logikeinheit 12, über das eine erste Schalteinheit 8 schaltbar ist. Außerdem umfasst die erste Regeleinheit 3 ein erstes Sperrelement 10. Die erste Schalteinheit 8 verbindet eine erste Anschlussstelle 6 der Erregerwicklung 5 mit dem Pluspol B+. Somit ist die elektrische Verbindung der ersten Anschlussstelle 6 mit dem Pluspol B+ durch die erste Schalteinheit 8 herstellbar oder trennbar. Über die erste Sperreinheit 10 ist die erste Anschlussstelle 6 mit dem Minuspol GND verbunden, wobei die erste Sperreinheit 10 einen Stromfluss von der ersten Anschlussstelle 6 zu dem Minuspol GND sperrt. Die erste Sperreinheit 10 ist insbesondere eine Diode.

Weiterhin umfasst der Spannungsregler 1 eine zweite Regeleinheit 4. Die zweite Regeleinheit 4 umfasst eine zweite Logikeinheit 13. Über die zweite Logikeinheit 13 ist eine zweite Schaltvorrichtung 9 schaltbar. Außerdem umfasst die zweite Regeleinheit 4 eine zweite Sperreinheit 11. Über die zweite Schalteinheit 9 ist wahlweise eine elektrische Verbindung zwischen einer zweiten Anschlussstelle 7 der Erregerwicklung 5 und dem Minuspol GND herstellbar oder trennbar. Über die zweite Sperreinheit 11 ist eine elektrische Verbindung zwischen der zweiten Anschlussstelle 7 und dem Pluspol B+ vorhanden, wobei die zweite Sperreinheit 11 einen Stromfluss von dem Pluspunkt B+ zu der zweiten Anschlussstelle 7 sperrt.

In einem Normalbetrieb ist sowohl die erste Schalteinheit 8 als auch die zweite Schalteinheit 9 geschlossen, so das ein elektrischer Kontakt zwischen der ersten Anschlussstelle 6 und dem Pluspol B+ und der zweiten Anschlussstelle 7 und dem Minuspol GND vorhanden ist. Die Erregerwicklung 5 erstreckt sich zwischen der ersten Anschlussstelle 6 und der zweiten Anschlussstelle 7. Durch Öffnen der ersten Schalteinheit und der zweiten Schalteinheit 9 lässt sich die Ausgangsspannung der Lichtmaschine 2 Regeln. Hierzu ist ein einfaches Konzept vorhanden:
Anhand der ersten Logikeinheit 12 wird die Ausgangsspannung der Lichtmaschine 2 überwacht. Sobald die Ausgangsspannung einen ersten Maximalwert 100 überschreitet, öffnet die erste Logikeinheit 12 die erste Schalteinheit 8. Sobald die Ausgangsspannung einen ersten Minimalwert 300 unterschreitet, wird die erste Schalteinheit 8 durch die erste Logikeinheit 12 wieder geschlossen.

Die zweite Regeleinheit 4 arbeitet grundsätzlich nach demselben Prinzip. So ist die zweite Logikeinheit 13 eingerichtet, die zweite Schalteinheit 9 zu öffnen, wenn die Ausgangsspannung den ersten Maximalwert 100 überschreitet und zu schließen, wenn die Ausgangsspannung den ersten Minimalwert 300 unterschreitet. Zusätzlich ist die zweite Logikeinheit 13 ausgebildet, die zweite Schalteinheit 9 zu öffnen, wenn die Ausgangsspannung einen zweiten Maximalwert 200 überschreitet und zu schließen, wenn die Ausgangsspannung einen zweiten Minimalwert 400 unterschreitet. Die Wahl ob der erste Maximalwert 100 und der erste Minimalwert 300 oder stattdessen der zweite Maximalwert 200 und der zweiten Minimalwert 400 verwendet werden ist abhängig, ob ein Defekt an der ersten Regeleinheit 3 detektiert wurde.

In einem Normalzustand, in dem die erste Regeleinheit 3 keinen Defekt aufweist, verwendet die zweite Logikeinheit 13 den zweiten Maximalwert 200 und den zweiten Minimalwert 400. Der zweite Maximalwert 200 und der zweiten Minimalwert 400 sind insbesondere größer als der erste Maximalwert 100. Somit stellt die zweite Regeleinheit 4 eine nachgeschaltete Regelstufe zu der ersten Regeleinheit 3 dar. Ein Absinken der Ausgangsspannung durch die erste Regeleinheit 3 basiert auf einem Entladen der Erregerspule 5, die sich zwischen der ersten Anschlussstelle 6 und der zweiten Anschlussstelle 7 erstreckt. Wird die erste Schalteinheit 8 geschaltet, um eine elektrische Verbindung zwischen dem Pluspol B+ und der ersten Anschlussstelle 6 zu trennen, so wird die Erregerwicklung 5 entladen bzw. entregt. Durch die geringere Erregerspannung ist somit auch eine geringere Ausgangsspannung der Lichtmaschine 2 vorhanden. Allerdings erfolgt ein Entladen der Erregerspule 5 mittels einer vordefinierten, spezifischen Entladekurve, wobei insbesondere eine Zeitkonstante vorhanden ist. Aufgrund dieser Entladekurve ist ein rasches Entladen der Erregerspule 5 nicht möglich. Somit ist ein rasches Absenken der Ausgangsspannung durch die erste Regeleinheit 3 nicht möglich. In einem normalen Betrieb ist dies aber auch nicht notwendig.

Durch das Schalten der ersten Schaltvorrichtung 8 ist insbesondere ein Freilauf aktivierbar. Dieser Freilauf erfolgt von der Erregerwicklung 5 zu der zweiten Anschlussstelle 7, dem zweiten Schaltelement 9, dem ersten Sperrelement 10 und schließlich über die erste Anschlussstelle 6 zurück zu der Erregerwicklung 5.

Steigt jedoch die Ausgangsspannung der Lichtmaschine 2 stark an, was insbesondere bei Abschalten eines energieintensiven Verbrauchers 15 innerhalb des Bordnetz 16 geschehen kann, so besteht die Gefahr, dass eine zu hohe Spannung über einen zu hohen Zeitraum innerhalb des Bordnetzes 16 bestehen bleibt, wodurch Komponenten innerhalb des Bordnetzes 16 beschädigt werden können. Daher erfolgt ein Öffnen der zweiten Schaltvorrichtung 9 durch die zweite Logikeinheit 13 in dem Fall, in dem die Ausgangsspannung den zweiten Maximalwert 200 überschreitet. Somit erfolgt ein schnelleres Entladen der Erregerwicklung 5.

Durch das Schalten der zweiten Schaltvorrichtung 9 erfolgt ein Freilauf von der Erregerwicklung 5 über die zweite Anschlussstelle 7, die zweite Sperreinheit 11, das Bordnetz 16, die erste Sperreinheit 10 und über die erste Anschlussstelle 6 zurück zu der Erregerwicklung 5.

Sollte jedoch ein Defekt innerhalb der ersten Regeleinheit 3 vorliegen, so ist die zweite Logikeinheit 13 ausgebildet, die zweite Schaltvorrichtung 9 in Abhängigkeit von dem ersten Maximalwert 100 und dem ersten Minimalwert 300 zu schalten. Somit übernimmt die zweite Regeleinheit 4 die Aufgaben der ersten Regeleinheit 3 und hält die Ausgangsspannung auf einem Niveau, dass Komponenten des Bordnetzes 16 nicht beschädigte. Somit ist vermieden, dass ein Eingreifen des Spannungsreglers 1 erst bei dem höheren zweiten Maximalwert 200 erfolgt. Vielmehr erfolgt ein Eingreifen des Spannungsreglers 1 stets bei dem ersten Maximalwert 100, unabhängig davon ob die erste Regelungseinheit 3 defekt ist oder nicht.

Figur 2 zeigt schematisch einen Fall, in dem aufgrund eines Defekts der ersten Regelungseinheit 3 die zweite Regelungseinheit 4 von dem zweiten Maximalwert 200 und dem zweiten Minimalwert 400 auf den ersten Maximalwert 100 und den ersten Minimalwert 300 wechselt. In dem gezeigten Diagramm ist ein Verlauf der Ausgangsspannung der Lichtmaschine 2 dargestellt. Zu einem Startzeitpunkt 600 tritt ein Defekt in der ersten Regelungseinheit 3 auf. Dies bedeutet, dass die erste Schalteinheit 8 durchgängig geschlossen ist und nicht mehr geöffnet wird. Somit steigt die Ausgangsspannung an, bis an dem zweiten Maximalwert 200 die zweite Regeleinheit 4 eingreift. Da jedoch die zweite Regeleinheit 4 bei unterschreiten des zweiten Minimalwert 400 durch die Ausgangsspannung die zweite Schalteinheit 9 wieder schließt, da in diesem Fall davon aus gegangen werden kann, dass ein Regeln der Ausgangsspannung nun wieder von der ersten Regeleinheit 3 übernommen werden kann, steigt die Ausgangsspannung aufgrund der defekten ersten Regeleinheit 3 wiederum an. Sobald die Ausgangsspannung erneut den zweiten Maximalwert 200 erreicht hat, erfolgt ein erneutes Eingreifen der zweiten Regeleinheit 4 durch Öffnen der zweiten Schaltvorrichtung 9. Somit wird die Ausgangsspannung stets zwischen dem zweiten Minimalwert 400 und dem zweiten Maximalwert 200 gehalten.

Durch die zweite Regeleinheit 4, insbesondere durch die zweite Logikeinheit 13, ist außerdem eine Zeitspanne erkennbar, innerhalb derer sich die Ausgangsspannung oberhalb des ersten Maximalwerts 100 befindet. Insbesondere kann diese Zeit dadurch abgeschätzt werden, wie lange sich die Ausgangsspannung oberhalb des von der zweiten Regeleinheit 9 erfassbaren zweiten Minimalwerts 400 befindet. Sobald diese Zeitspanne eine vordefinierte Zeitspanne 500, insbesondere eine Zeitspanne von mehr als 0,5 Sekunden, überschreitet, geht die zweite Logikeinheit 13 von einem Defekt der ersten Regeleinheit 3 aus. Somit benötigt die zweite Regeleinheit 4 keine zusätzlichen Komponenten, um einen Defekt der ersten Regeleinheit 3 zu erkennen.

Sobald ein derartiger Defekt erkannt wurde, verwendet die zweite Logikeinheit 13 lediglich den ersten Maximalwert 100 und den ersten Minimalwert 300 zum regeln der Ausgangsspannung. So wird die zweite Schalteinheit 9 bei Überschreiten des ersten Maximalwerts 100 geöffnet und bei Unterschreiten des ersten Minimalwert 300 geschlossen. Auf diese Weise ist dieselbe Regelfunktion realisierbar wie durch die erste Regeleinheit 3. Somit ist sichergestellt, dass die Ausgangsspannung nicht zwischen dem zweiten Minimalwert 400 und dem zweiten Maximalwert 200, sondern vielmehr zwischen dem ersten Minimalwert 300 und dem ersten Maximalwert 100 verbleibt.

In einer bevorzugten Ausführungsform beträgt der erste Maximalwert 100 14,2 Volt, der zweite Maximalwert 200 16,2 Volt, der erste Minimalwert 300 14,0 Volt und der zweiten Minimalwert 400 16,0 Volt. Somit lassen sich in einem Normalbetrieb Spannungen über 16,0 Volt rasch abbauen, während bei einem Defekt der ersten Regeleinheit 3 die Ausgangsspannung der Lichtmaschine 2 nicht dauerhaft über 14,2 Volt ansteigt. Auf diese Weise ist einerseits eine Redundanz innerhalb des Spannungsreglers 1 vorhanden, andererseits kann der Spannungsregler 1 als Stufenregler verwendet werden.

## Patentansprüche

1. Spannungsregler (1) einer Lichtmaschine (2), zum Regeln der Ausgangsspannung der Lichtmaschine umfassend
• eine erste Regeleinheit (3), und
• eine von der ersten Regeleinheit (3) unabhängige zweite Regeleinheit (4),
• wobei die erste Regeleinheit (3) zum Senken einer Ausgangsspannung der Lichtmaschine (2) bei Überschreiten eines ersten Maximalwerts (100) ausgebildet ist, und
• wobei die zweite Regeleinheit (4) zum Senken der Ausgangsspannung wahlweise bei Überschreiten des ersten Maximalwerts (100) oder bei Überschreiten eines von dem ersten Maximalwert (100) verschiedenen zweiten Maximalwerts (200) ausgebildet ist,
**dadurch gekennzeichnet, dass** die zweite Regeleinheit (4) dazu angepasst ist in einem Normalzustand, in dem die erste Regeleinheit (3) funktionstüchtig ist, die Ausgangsspannung bei Überschreiten eines zweiten Maximalwerts abzusenken und wobei die zweite Regeleinheit (4) weiterhin dazu angepasst ist bei einem Defekt an der ersten Regeleinheit (3) die Ausgangsspannung bei Überschreiten des ersten Maximalwerts abzusenken, wobei der zweite Maximalwert oberhalb des ersten Maximalwerts liegt.

2. Spannungsregler (1) nach Anspruch 1, **dadurch gekennzeichnet, dass** die erste Regeleinheit (3) und die zweite Regeleinheit (4) zum Beeinflussen einer als Stellgröße dienenden Erregerspannung einer Erregerwicklung (5) der Lichtmaschine (2) ausgebildet sind.

3. Spannungsregler (1) nach Anspruch 1, **dadurch gekennzeichnet, dass** die zweite Regeleinheit (4) ausgebildet ist, einen Defekt an der ersten Regeleinheit (3) zu erkennen, wenn die Ausgangsspannung über einen vordefinierten Zeitraum (500) oberhalb eines vordefinierten Wertes liegt.

4. Spannungsregler (1) nach einem der vorhergehenden Ansprüche, **dadurch gekennzeichnet, dass** die erste Regeleinheit (3) eine erste Schalteinheit (8) und die zweite Regeleinheit (4) ein zweite Schalteinheit (9) umfasst, wobei die Erregerwicklung (5) durch die erste Schalteinheit (8) und die zweite Schalteinheit (9) entladbar ist.

5. Spannungsregler (1) nach Anspruch 3, **dadurch gekennzeichnet, dass** die erste Regeleinheit (3) eine erstes Logikeinheit (12) und die zweite Regeleinheit (4) eine zweite Logikeinheit (13) aufweisen,
• wobei die erste Logikeinheit (12) und die zweite Logikeinheit (13) zum Erfassen der Ausgangsspannung eingerichtet sind,
• wobei die erste Logikeinheit (12) zum Schalten der ersten Schalteinheit (8) ausgebildet ist, wenn die Ausgangsspannung den ersten Maximalwert (100) überschreitet oder einen ersten Minimalwert (300), der geringer als der erste Maximalwert (100) ist, unterschreitet, und
• wobei die zweite Logikeinheit (13) wahlweise zum Schalten der zweiten Schalteinheit (9), wenn die Ausgangsspannung den ersten Maximalwert (100) überschreitet oder den ersten Minimalwert (300) unterschreitet oder zum Schalten der zweiten Schalteinheit (9), wenn die Ausgangsspannung den zweiten Maximalwert (200) überschreitet oder einen zweiten Minimalwert (400), der geringer als der zweite Maximalwert (200) ist, unterschreitet, ausgebildet ist.

6. Spannungsregler (1) nach einem der vorhergehenden Ansprüche, **dadurch gekennzeichnet, dass** die erste Schalteinheit (8) zum Schalten einer elektrischen Verbindung zwischen einer ersten Anschlussstelle (6) der Erregerwicklung (5) und einem Pluspol (B+) der Lichtmaschine (2) und die zweite Schalteinheit (9) zum Schalten einer elektrischen Verbindung zwischen einer zweiten Anschlussstelle (7) der Erregerwicklung (5) und einem Minuspol (GND) der Lichtmaschine (2) ausgebildet ist.

7. Spannungsregler (1) nach Anspruch 6, **dadurch gekennzeichnet, dass** die erste Regeleinheit (3) eine erste Sperreinheit (10) aufweist, die zwischen der ersten Anschlussstelle (6) und dem Minuspol (GND) angeordnet ist und einen Stromfluss von der ersten Anschlussstelle (6) zu dem Minuspol (GND) sperrt, und dass die zweite Regeleinheit (4) eine zweite Sperreinheit (11) aufweist, die zwischen der zweiten Anschlussstelle (7) und dem Pluspol (B+) angeordnet ist und einen Stromfluss von dem Pluspol (B+) zu der zweiten Anschlussstelle (7) sperrt.

8. Lichtmaschine (2) **gekennzeichnet durch** einen Spannungsregler (1) nach einem der vorhergehenden Ansprüche.

## Claims

1. Voltage controller (1) of a generator (2) for controlling the output voltage of the generator comprising
• a first control unit (3), and
• a second control unit (4) independent of the first control unit (3),
• wherein the first control unit (3) is designed to lower an output voltage of the generator (2) when a first maximum value (100) is exceeded, and
• wherein the second control unit (4) is designed to lower the output voltage either when the first maximum value (100) is exceeded or when a second maximum value (200) different from the first maximum value (100) is exceeded,
**characterized in that**, in a normal state in which the first control unit (3) is operative, the second control unit (4) is adapted to lower the output voltage when a second maximum value is exceeded and wherein, in the case of a fault at the first control unit (3), the second control unit (4) is furthermore adapted to lower the output voltage when the first maximum value is exceeded, wherein the second maximum value is above the first maximum value.

2. Voltage controller (1) according to Claim 1, **characterized in that** the first control unit (3) and the second control unit (4) are designed to influence an excitation voltage, serving as manipulated variable, of an excitation winding (5) of the generator (2).

3. Voltage controller (1) according to Claim 1, **characterized in that** the second control unit (4) is designed to identify a fault at the first control unit (3) when the output voltage is above a predefined value over a predefined period (500).

4. Voltage controller (1) according to one of the preceding claims, **characterized in that** the first control unit (3) comprises a first switching unit (8) and the second control unit (4) comprises a second switching unit (9), wherein the excitation winding (5) can be discharged by way of the first switching unit (8) and the second switching unit (9).

5. Voltage controller (1) according to Claim 3, **characterized in that** the first control unit (3) has a first logic unit (12) and the second control unit (4) has a second logic unit (13),
• wherein the first logic unit (12) and the second logic unit (13) are set up to detect the output voltage,
• wherein the first logic unit (12) is designed to switch the first switching unit (8) when the output voltage exceeds the first maximum value (100) or falls below a first minimum value (300), which is lower than the first maximum value (100), and
• wherein the second logic unit (13) is designed either to switch the second switching unit (9) when the output voltage exceeds the first maximum value (100) or falls below the first minimum value (300) or to switch the second switching unit (9) when the output voltage exceeds the second maximum value (200) or falls below a second minimum value (400), which is lower than the second maximum value (200).

6. Voltage controller (1) according to one of the preceding claims, **characterized in that** the first switching unit (8) is designed to switch an electrical connection between a first connection point (6) of the excitation winding (5) and a positive pole (B+) of the generator (2) and the second switching unit (9) is designed to switch an electrical connection between a second connection point (7) of the excitation winding (5) and a negative pole (GND) of the generator (2).

7. Voltage controller (1) according to Claim 6, **characterized in that** the first control unit (3) has a first blocking unit (10), which is arranged between the first connection point (6) and the negative pole (GND) and blocks a flow of current from the first connection point (6) to the negative pole (GND), and **in that** the second control unit (4) has a second blocking unit (11), which is arranged between the second connection point (7) and the positive pole (B+) and blocks a flow of current from the positive pole (B+) to the second connection point (7).

8. Generator (2) **characterized by** a voltage controller (1) according to one of the preceding claims.

## Revendications

1. Régulateur de tension (1) d'une génératrice (2), destiné à réguler la tension de sortie de la génératrice, comprenant
• une première unité de régulation (3), et
• une deuxième unité de régulation (4) indépendante de la première unité de régulation (3),
• la première unité de régulation (3) étant réalisée pour abaisser une tension de sortie de la génératrice (2) en cas de dépassement d'une première valeur maximale (100), et
• la deuxième unité de régulation (4) étant réalisée pour abaisser la tension de sortie au choix en cas de dépassement de la première valeur maximale (100) ou en cas de dépassement d'une deuxième valeur maximale (200) différente de la première valeur maximale (100),
**caractérisé en ce que** dans un état normal dans lequel la première unité de régulation (3) est opérationnelle, la deuxième unité de régulation (4) est adaptée pour abaisser la tension de sortie en cas de dépassement d'une deuxième valeur maximale, et dans lequel la deuxième unité de régulation (4) est en outre adaptée, en cas de défaut au niveau de la première unité de régulation (3), pour abaisser la tension de sortie en cas de dépassement de la première valeur maximale, la deuxième valeur maximale étant au-dessus de la première valeur maximale.

2. Régulateur de tension (1) selon la revendication 1, **caractérisé en ce que** la première unité de régulation (3) et la deuxième unité de régulation (4) sont réalisées pour influencer une tension d'excitation d'un enroulement d'excitation (5) de la génératrice (2) servant de grandeur de réglage.

3. Régulateur de tension (1) selon la revendication 1, **caractérisé en ce que** la deuxième unité de régulation (4) est réalisée pour reconnaître un défaut au niveau de la première unité de régulation (3) si la tension de sortie est au-dessus d'une valeur prédéfinie pendant une période prédéfinie (500).

4. Régulateur de tension (1) selon l'une quelconque des revendications précédentes, **caractérisé en ce que** la première unité de régulation (3) comprend une première unité de commutation (8), et la deuxième unité de régulation (4) comprend une deuxième unité de commutation (9), l'enroulement d'excitation (5) pouvant être déchargé par l'intermédiaire de la première unité de commutation (8) et de la deuxième unité de commutation (9).

5. Régulateur de tension (1) selon la revendication 3, **caractérisé en ce que** la première unité de régulation (3) présente une première unité logique (12) et la deuxième unité de régulation (4) présente une deuxième unité logique (13),
• la première unité logique (12) et la deuxième unité logique (13) étant aménagées pour détecter la tension de sortie,
• la première unité logique (12) étant réalisée pour commuter la première unité de commutation (8) lorsque la tension de sortie dépasse la première valeur maximale (100) ou soupasse une première valeur minimale (300) qui est inférieure à la première valeur maximale (100), et
• la deuxième unité logique (13) étant réalisée au choix pour commuter la deuxième unité de commutation (9) lorsque la tension de sortie dépasse la première valeur maximale (100) ou soupasse la première valeur minimale (300), ou pour commuter la deuxième unité de commutation (9) lorsque la tension de sortie dépasse la deuxième valeur maximale (200) ou soupasse une deuxième valeur minimale (400) qui est inférieure à la deuxième valeur maximale (200).

6. Régulateur de tension (1) selon l'une quelconque des revendications précédentes, **caractérisé en ce que** la première unité de commutation (8) est réalisée pour commuter une liaison électrique entre un premier point de connexion (6) de l'enroulement d'excitation (5) et un pôle positif (B+) de la génératrice (2), et la deuxième unité de commutation (9) est réalisée pour commuter une liaison électrique entre un deuxième point de connexion (7) de l'enroulement d'excitation (5) et un pôle négatif (GND) de la génératrice (2).

7. Régulateur de tension (1) selon la revendication 6, **caractérisé en ce que** la première unité de régulation (3) présente une première unité de blocage (10) qui est disposée entre le premier point de connexion (6) et le pôle négatif (GND) et bloque une conduction de courant du premier point de connexion (6) au pôle négatif (GND), et **en ce que** la deuxième unité de régulation (4) présente une deuxième unité de blocage (11) qui est agencée entre le deuxième point de connexion (7) et le pôle positif (B+) et bloque une conduction de courant du pôle positif (B+) au deuxième point de connexion (7).

8. Génératrice (2), **caractérisée par** un régulateur de tension (1) selon l'une quelconque des revendications précédentes.
